# EUROPÄISCHE PATENTSCHRIFT

(11) **EP 0 716 973 B1**
(45) Veröffentlichungstag und Bekanntmachung des Hinweises auf die Patenterteilung: **16.09.1998**
(21) Anmeldenummer: 95110903.2
(22) Anmeldetag: 12.07.1995
(51) Int. Cl.: B62B 5/04, B62B 5/06

(54) **Bremsvorrichtung für von Hand bewegbare Transportwagen**
Braking device for handcarts
Dispositif de frein pour chariots à main

(30) Priorität: 16.12.1994 DE 9420133 U
(43) Veröffentlichungstag der Anmeldung: 19.06.1996
(73) Patentinhaber: WANZL METALLWARENFABRIK GMBH, D-89336 Leipheim (DE)
(72) Erfinder: Schurr, Eberhard, D-89340 Leipheim (DE)

(56) Entgegenhaltungen:
- DE-A- 4 034 241
- DE-C- 815 454
- DE-U- 9 311 364
- US-A- 1 536 285

## Beschreibung

Die Erfindung betrifft einen von Hand bewegbaren Transportwagen, mit einem mit Fahrrollen ausgestatteten Fahrgestell, das wenigstens eine Abstelleinrichtung und/oder mindestens ein Behältnis trägt, wobei das Fahrgestell wenigstens zwei Träger aufweist, die im rückwärtigen Bereich angeordnet zu beiden Seiten des Fahrgestelles nach oben gerichtet sind und einen um eine horizontale Achse verschwenkbaren Schiebegriff tragen, der zusätzlich als Betätigungsvorrichtung für eine Bremseinrichtung vorgesehen ist, die auf mindestens eine der Fahrrollen einwirkt.

Das deutsche Gebrauchsmuster G 93 11 364.1 beschreibt einen derartigen Transportwagen. Die Teile der Bremseinrichtung dieses Transportwagens sind größtenteils in den beiden aus Rohren bestehenden Trägern angeordnet, um sie vor Beschädigung zu schützen und um den Transportwagen gefällig aussehen zu lassen. Zu den erwähnten Teilen gehören auch jene, die beim Verschwenken des Schiebegriffes Druck auf wenigstens einen der Hydraulikzylinder der Bremseinrichtung ausüben. Es ist bekannt, daß sich die Fahrrollen von Transportwagen im Laufe der Zeit abnützen. Damit die Bremseinrichtungen auch bei abgenützten, jedoch noch intakten Fahrrollen funktionstüchtig bleiben, müssen die Bremseinrichtungen in der Regel nachjustiert werden. Befindet sich jedoch ein Teil der Bremseinrichtung in einem oder in beiden Trägern so, wie dies geschildert wurde, gestaltet sich ein Nachjustieren mühevoll. Auch die Montage der Bremseinrichtung erweist sich als zeitaufwendig, da deren Teile zum Großteil in den Trägern untergebracht werden müssen.

Es ist Aufgabe der Erfindung, einen gattungsgemäßen Transportwagen zu schaffen, dessen Bremseinrichtung rasch und bequem nachjustiert werden kann, bei dem die Teile der Bremseinrichtung zeitsparender als bisher montierbar sind und bei dem diese Teile in nichtstörender Weise am Transportwagen untergebracht werden können.

Die Lösung der Aufgabe besteht darin, daß zwischen dem Schiebegriff und den Trägern zwei Zwischenstücke vorgesehen sind, die aus je einem Lagerstück und aus wenigstens je einem Abdeckteil gebildet sind, wobei mindestens ein Zwischenstück zur Aufnahme eines Teils der Bremseinrichtung bestimmt ist und die Lagerstücke, je ein Lager für den Schiebegriff bildend, ortsfest mit den Trägern verbunden sind.

Die vorgeschlagene Lösung bietet mehrere Vorteile. So können durch Entfernen des wenigstens einen Abdeckteiles die erwähnten Teile der Bremseinrichtung bequem in den Zwischenstücken untergebracht und montiert werden. Auch die zum Nachjustieren erforderlichen Stellteile sind bei abgenommenen Abdeckteilen gut erreichbar. Schließlich sind mit Ausnahme des Schiebegriffes und der auf die Fahrrollen einwirkenden Bremsteller oder Klötze alle übrigen Teile der Bremseinrichtung innerhalb der Träger und der Zwischenstücke, also von außen nicht sichtbar so untergebracht, daß diese Teile nicht störend am Transportwagen angeordnet und vor Beschädigung geschützt sind.

Die Erfindung wird anhand eines Ausführungsbeispieles näher erläutert. Es zeigt
- Fig. 1: einen Transportwagen;
- Fig. 2 und Fig. 3: je ein Zwischenstück mit einem Teil der Bremseinrichtung.

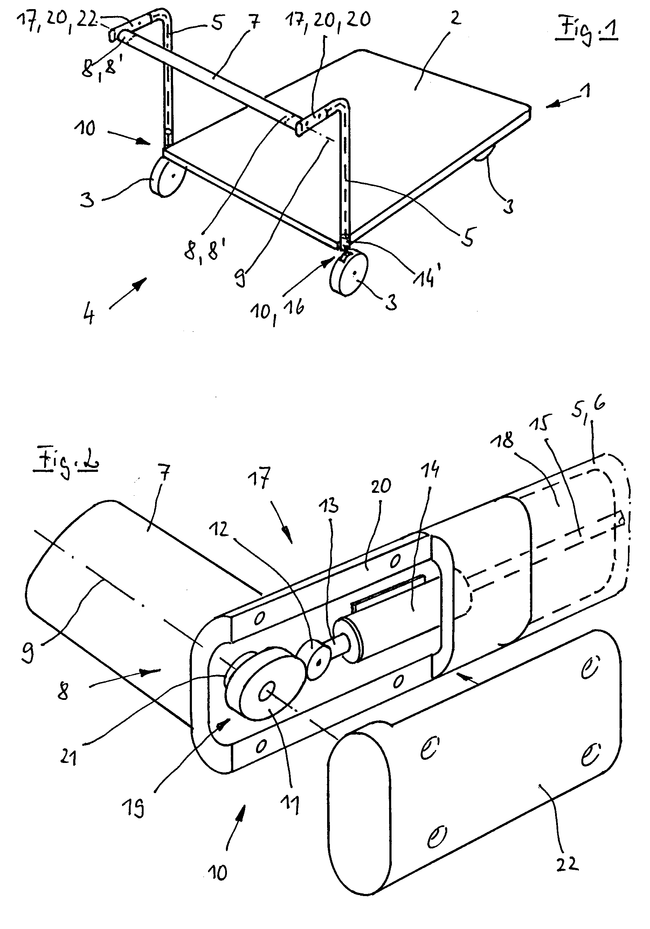

Der in Fig. 1 auf einfachste Bauweise reduziert dargestellte Transportwagen 1 steht stellvertretend für alle Transportwagen 1, Einkaufswagen, Kofferkulis usw., die im Sinne der Erfindung Verwendung finden können. Solche von Hand bewegbaren, gewöhnlich platzsparend stapelbaren Transportwagen 1 weisen wenigstens eine behälter- und/oder plattformartige Abstelleinrichtung 2 für zu transportierende Güter auf. Die mit wenigstens drei Fahrrollen 3 ausgestatteten Transportwagen 1 sind an ihrem hinteren Ende 4 mit wenigstens zwei nach oben führenden, bevorzugt rohrförmigen Trägern 5 ausgestattet, die auch nach hinten abgebogen sein können und die einen stabförmigen Schiebegriff 7 tragen. Der gewöhnlich einen unrunden Querschnitt aufweisende Schiebegriff 7 ist in je einem aus einem Lagerstück 20 und wenigstens einem Abdeckteil 22 gebildeten Zwischenstück 17 um eine horizontale Achse 9 schwenkbar gelagert. Die Zwischenstücke 17 sind zwischen dem Schiebegriff 7 und den Trägern 5 vorgesehen. Der Schiebegriff 7 ist mit einer auf wenigstens eine der Fahrrollen 3 einwirkenden Bremseinrichtung 10 so verbunden, daß durch Verschwenken des Schiebegriffes 7 um die horizontale Achse 9 eine Bremswirkung auf die wenigstens eine Fahrrolle 3 ausgeübt oder eine bestehende Bremswirkung wieder aufgehoben wird. Der Aufbau und die Anordnung der Bremseinrichtung 10 kann jener Bremseinrichtung 10 entsprechen, wie sie im deutschen Gebrauchsmuster G 93 11 364.1 beschrieben ist, so daß sich an dieser Stelle eine erneute Beschreibung einer solchen Bremseinrichtung 10 erübrigt. In der Zeichnung sind mit 8' zwei Kappen gekennzeichnet, die an den Enden 8 des Schiebegriffes 7 angeordnet sein können und dann Bestandteil des Schiebegriffes 7 sind. In diesem Falle bilden die Kappen 8' die Enden 8 des Schiebegriffes 7.

Fig. 2 zeigt ein an einem Träger 5 eines Transportwagens 1 angeordnetes Zwischenstück 17. Dessen Lagerstück 20 ist mit einem nicht näher gezeigten hohlen Ansatz 18 in das obere Ende 6 des Trägers 5 formschlüssig eingefügt und gegen Lösen gesichert. Das Zwischenstück 17 weist einen Raum 19 zur Aufnahme eines Teils der Bremseinrichtung 10 auf. Zu diesem Teil gehören wenigstens eine mit dem Schiebegriff 7 drehfest verbundene Nocke 11, ein mit der Nocke 11 korrespondierendes Stellglied 12, das auf den Kolben 13 eines ebenfalls im Zwischenstück 17 angeordneten Hydraulikzylinders 14 einwirkt, wobei der Hydraulikzylinder 14 in eine Hydraulikleitung 15 mündet, die zu mindestens einem weiteren Hydraulikzylinder 14' führt, der die auf die wenigstens eine Fahrtolle 3 einwirkende Bremse 16 beeinflußt, vgl. Fig. 1. Das Stellglied 12 ist so gestaltet und gelagert, daß dieses beim vom Zwischenstück 17 abgeschraubten Abdeckteil 22, mit einem geeigneten Werkzeug dann gedreht oder verstellt werden kann, wenn es gilt, die Bremseinrichtung 10 einzustellen oder nachzujustieren. Im Lagerstück 20 befindet sich ein horizontaler, gewöhnlich zylindrischer Durchbruch 21, um ein Lager für den Schiebegriff 7 zu bilden. Zu diesem Zweck sind an den Enden 8 des Schiebegriffes 7 geeignete Vorsprünge oder Zapfen vorgesehen, die in die Durchbrüche 21 eingreifen. Auf gleiche Weise können auch die Kappen 8' mit Vorsprüngen oder Zapfen ausgestattet sein, um, im Eingriff mit den Durchbrüchen 21, ein Verschwenken des Schiebegriffes 7 zu ermöglichen. Sofern erforderlich, können am Zwischenstück 17 auch mehr als ein Abdeckteil 22 vorhanden sein. Das Abdeckteil 22 ist so gestaltet, daß es einen Teil der Längserstreckung des Lagerstückes 20 abdeckt. Dies kann, wie gezeichnet, bevorzugt von der Seite aus geschehen. Auch ist es möglich, das Abdeckteil 22 von oben oder von unten her auf das Lagerstück 20 aufzusetzen. Welche Lösung man im Einzelfall wählen wird, hängt zum Teil auch von der Querschnittsform der Träger 5 ab.

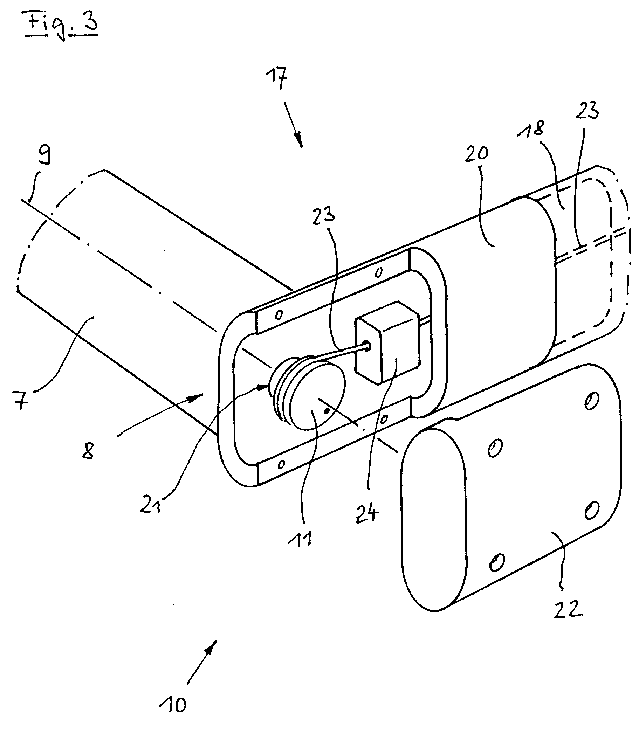

In Fig. 3 sind das gleiche Lagerstück 20 und das gleiche Abdeckteil 22, wie in Fig. 2 beschrieben, dargestellt. Jedoch ist bei diesem Ausführungsbeispiel anstelle von hydraulisch wirkenden Teilen der Bremseinrichtung 10 ein Seilzug 23 vorgesehen, der an der Nocke 11 befestigt und anschließend eine Führung 24 durchdringend nach unten zu einer Bremse 16, vgl. Fig. 1, für eine Fahrrolle 3 führt. Der Seilzug 23 umschlingt die Nocke 11 in einer Rille geführt zumindest teilweise. Die Bremseinrichtung 10 weist in bekannter Weise an mindestens einer der Fahrrollen 3 eine Druckfederanordnung auf, welche die Bremse 16 dann gebremst hält, wenn der Schiebegriff 7 losgelassen ist. Durch das Verschwenken des Schiebegriffes 7 wird die Druckfederanordnung durch den nun ein Stück nach oben gezogenen Seilzug 23 so verändert, daß die Bremse 16 gelöst ist. Weitere Einzelheiten der gesamten, einen Seilzug 23 aufweisenden Bremseinrichtung 10 sind durch den Stand der Technik bekannt und brauchen deshalb an dieser Stelle nicht erneut beschrieben werden.

Man wird in der Regel an jedem oberen Ende 6 eines Trägers 5 ein Zwischenstück 17 anordnen, dabei wenigstens ein Zwischenstück 17, gewöhnlichjedoch beide Zwischenstücke 17 zur Aufnahme eines Teiles (11, 12, 13, 14, 23) der Bremseinrichtung 10 bestimmen und die Enden 8 des Schiebegriffes 7 in je ein Lagerstück 20 der Zwischenstücke 17 münden lassen und in diesen lagern. Die horizontalen Durchbrüche 21 der beiden Lagerstücke 20 sind dabei auf der horizontalen Achse 9 angeordnet. Wird nur ein Zwischenstück 17 verwendet, so ist das dem entgegengesetzt zum Zwischenstück 17 angeordnete Ende 8 des Schiebegriffes 7 auf geeignete Weise im gegenüberliegenden Träger 5 verschwenkbar abzustützen.

## Patentansprüche

1. Von Hand bewegbarer Transportwagen, mit einem mit Fahrrollen ausgestatteten Fahrgestell, das wenigstens eine Abstelleinrichtung und/oder mindestens ein Behältnis trägt, wobei das Fahrgestell wenigstens zwei Träger aufweist, die im rückwärtigen Bereich angeordnet zu beiden Seiten des Fahrgestelles nach oben gerichtet sind und einen um eine horizontale Achse verschwenkbaren Schiebegriff tragen, der zusätzlich als Betätigungsvorrichtung für eine Bremseinrichtung vorgesehen ist, die auf mindestens eine der Fahrtollen einwirkt, dadurch **gekennzeichnet**, daß zwischen dem Schiebegriff (7) und den Trägern (5) zwei Zwischenstücke (17) vorgesehen sind, die aus je einem Lagerstück (20) und aus wenigstens je einem Abdeckteil (22) gebildet sind, wobei mindestens ein Zwischenstück (17) zur Aufnahme eines Teils der Bremseinrichtung (10) bestimmt ist und die Lagerstücke (20), je ein Lager für den Schiebegriff (7) bildend, ortsfest mit den Trägern (5) verbunden sind.

2. Von Hand bewegbarer Transportwagen nach Anspruch 1, dadurch **gekennzeichnet**, daß die für den Schiebegriff (7) bestimmten Lager durch horizontale Durchbrüche (21) gebildet sind, die, auf der horizontalen Achse (9) angeordnet, in den Lagerstücken (20) vorgesehen sind.

3. Von Hand bewegbarer Transportwagen nach Anspruch 1 oder 2, dadurch **gekennzeichnet**, daß jedes Lagerstück (20) mit einem hohlen Ansatz (18) ausgestattet ist, der zum formschlüssigen Einfügen in das obere Ende (6) eines Trägers (5) bestimmt ist.

4. Von Hand bewegbarer Transportwagen nach einem der Ansprüche 1 bis 3, dadurch **gekennzeichnet**, daß anstelle von zwei Zwischenstücken (17) nur ein Zwischenstück (17) vorgesehen ist und daß das andere Ende (8) des Schiebegriffes (7) in jenem Träger (5) bewegbar abgestützt ist, der gegenüber dem Zwischenstück (17) angeordnet ist.

5. Von Hand bewegbarer Transportwagen nach einem der Ansprüche 1 bis 4, dadurch **gekennzeichnet**, daß der in wenigstens einem Zwischenstück (17) untergebrachte Teil der Bremseinrichtung (10) durch eine mit dem Schiebegriff (7) drehfest verbundene Nocke (11), ein mit der Nocke (11) korrespondierendes Stellglied (12) und durch einen Hydraulikzylinder (14) gebildet ist, auf dessen Kolben (13) das Stellglied (12) einwirkt.

6. Von Hand bewegbarer Transportwagen nach Anspruch 5, dadurch **gekennzeichnet**, daß das Stellglied (12) durch Abschrauben des wenigstens einen Abdeckteiles (22) mit Hilfe eines geeigneten Werkzeuges erreichbar ist.

7. Von Hand bewegbarer Transportwagen nach einem der Ansprüche 1 bis 4, dadurch **gekennzeichnet**, daß der in wenigstens einem Zwischenstück (17) untergebrachte Teil der Bremseinrichtung (10) durch eine mit dem Schiebegriff (7) drehfest verbundene Nocke (11) und einem an der Nocke (11) befestigten, zu einer auf eine Fahrrolle (3) einwirkenden Bremse (16) führenden Seilzug (23) gebildet ist.

8. Von Hand bewegbarer Transportwagen nach einem der Ansprüche 1 bis 7, dadurch **gekennzeichnet**, daß die Enden (8) des Schiebegriffes (7) durch auf den Schiebegriff (7) aufgesetzte Kappen (8') gebildet sind.

9. Von Hand bewegbarer Transportwagen nach einem der Ansprüche 1 bis 8, dadurch **gekennzeichnet**, daß an den Enden (8) des Schiebegriffes (7) je ein Vorsprung vorgesehen ist, die zum Eingreifen in die horizontalen Durchbrüche (21) der Lagerstücke (20) bestimmt sind.

10. Von Hand bewegbarer Transportwagen nach einem der Ansprüche 1 bis 8, dadurch **gekennzeichnet**, daß die am Schiebegriff (7) befindlichen Kappen (8') zum Eingreifen in die horizontalen Durchbrüche (21) der Lagerstücke (20) vorgesehen sind.

## Claims

1. A manually movable trolley, comprising a wheel frame provided with castors and carrying at least one shelf arrangement and/or at least one receptacle, wherein the wheel frame has at least two supports which are arranged in the rear region on either side of the wheel frame so as to extend upwards and which carry a handle pivotable about a horizontal axis, the handle additionally being provided as an operating device for a braking arrangement acting on at least one of the castors, characterised in that two intermediate pieces (17) are provided between the handle (7) and the supports (5) and are each formed from a mounting member (20) and at least one covering part (22), at least one intermediate piece (17) being provided for accommodating part of the braking arrangement (10), and the mounting members (20), each forming a mounting for the handle (7), being fixedly connected to the supports (5).

2. A manually movable trolley according to claim 1, characterised in that the mountings for the handle (7) are formed by horizontal openings (21) provided in the mounting members (20) and arranged on the horizontal axis (9).

3. A manually movable trolley according to claim 1 or 2, characterised in that each mounting member (20) is provided with a hollow extension (18) for positive insertion into the upper end (6) of a support (5).

4. A manually movable trolley according to any one of claims 1 to 3, characterised in that only one intermediate piece (17) is provided instead of two intermediate pieces (17), and in that the other end (8) of the handle (7) is movably supported in that support (5) which is arranged opposite the intermediate piece (17).

5. A manually movable trolley according to any one of claims 1 to 4, characterised in that the part of the braking arrangement (10) housed in at least one intermediate piece (17) is formed by a cam (11) connected to the handle (7) in a rotationally fixed manner, by a control element (12) corresponding to the cam (11), and by a hydraulic cylinder (14), the control element (12) acting on the piston (13) thereof.

6. A manually movable trolley according to claim 5, characterised in that the control element (12) is accessible by unscrewing the at least one covering part (22) using a suitable tool.

7. A manually movable trolley according to any one of claims 1 to 4, characterised in that the part of the braking arrangement (10) housed in at least one intermediate piece (17) is formed by a cam (11) connected to the handle (7) in a rotationally fixed manner, and a cable (23) fastened to the cam (11) and leading to a brake (16) acting on a castor (3).

8. A manually movable trolley according to any one of claims 1 to 7, characterised in that the ends (8) of the handle (7) are formed by caps (8') mounted on the handle (7).

9. A manually movable trolley according to any one of claims 1 to 8, characterised in that each of the ends (8) of the handle (7) is provided with a projection for engaging in the horizontal openings (21) in the mounting members (20).

10. A manually movable trolley according to any one of claims 1 to 8, characterised in that the caps (8') on the handle (7) are provided for engagement in the horizontal openings (21) in the mounting members (20).

## Revendications

1. Chariot de transport déplaçable à la main, avec un châssis qui est équipé de galets de roulement et qui porte au moins un dispositif récepteur et/ou au moins un récipient, le châssis présentant au moins deux barres, qui sont disposées dans la région arrière en étant dirigées vers le haut de part et d'autre du châssis et qui portent une poignée coulissante, pouvant pivoter autour d'un axe horizontal et prévue en outre comme dispositif d'actionnement pour un dispositif de freinage qui agit sur au moins un des galets de roulement, **caractérisé** en ce que deux entretoises (17) sont prévues entre la poignée coulissante (7) et les barres (5), qui sont chacune constituées d'une partie de palier (20) et d'au moins une partie de recouvrement (22), au moins une entretoise (17) étant destinée à recevoir une partie du dispositif de freinage (10) et les parties de palier (20), constituant chacune un palier de montage pour la poignée coulissante (7), étant assemblées fixement aux barres (5).

2. Chariot de transport déplaçable à la main selon la revendication 1, **caractérisé** en ce que les paliers destinés à la poignée coulissante (7) sont formés par des découpures horizontales (21), qui sont pratiquées dans les parties de palier (20) en étant disposées sur l'axe horizontal (9).

3. Chariot de transport déplaçable à la main selon la revendication 1 ou 2, **caractérisé** en ce que chaque partie de palier (20) est équipée d'un appendice creux (18), qui est destiné à être inséré en engagement positif dans l'extrémité supérieure (6) d'une barre (5).

4. Chariot de transport déplaçable à la main selon une des revendications 1 à 3, **caractérisé** en ce qu'au lieu de deux entretoises (17), il est prévu une seule entretoise (17), et en ce que l'autre extrémité (8) de la poignée coulissante (7) est soutenue à déplacement dans la barre (5) qui est disposée à l'opposé de l'entretoise (17).

5. Chariot de transport déplaçable à la main selon une des revendications 1 à 4, **caractérisé** en ce que la partie du dispositif de freinage (10) qui est logée dans au moins une entretoise (17) est constituée d'une came (11) assemblée en solidarité de rotation à la poignée coulissante (7), d'un organe de commande (12) coopérant avec la came (11), et d'un cylindre hydraulique (14) sur le piston (13) duquel agit l'organe de commande (12).

6. Chariot de transport déplaçable à la main selon la revendication 5, **caractérisé** en ce que l'organe de commande (12) peut être atteint à l'aide d'un outil approprié en dévissant la ou les parties de recouvrement (22).

7. Chariot de transport déplaçable à la main selon une des revendications 1 à 4, **caractérisé** en ce que la partie du dispositif de freinage (10) qui est logée dans au moins une entretoise (17) est constituée d'une came (11) assemblée en solidarité de rotation à la poignée coulissante (7), et d'un câble Bowden (23) fixé à la came (11) et menant à un frein (16) agissant sur un galet de roulement (3).

8. Chariot de transport déplaçable à la main selon une des revendications 1 à 7, **caractérisé** en ce que les extrémités (8) de la poignée coulissante (7) sont formés par des caches (8') montés sur la poignée coulissante (7).

9. Chariot de transport déplaçable à la main selon une des revendications 1 à 8, **caractérisé** en ce que des saillies respectives, qui sont destinées à s'engager dans les découpures horizontales (21) des parties de palier (20), sont prévues aux extrémités (8) de la poignée coulissante (7).

10. Chariot de transport déplaçable à la main selon une des revendications 1 à 8, **caractérisé** en ce que les caches (8') présents sur la poignée coulissante (7) sont destinés à s'engager dans les découpures horizontales (21) des parties de palier (20).
